# EUROPEAN PATENT APPLICATION

(11) **EP 4 270 758 A1**
(43) Date of publication of application: **01.11.2023**
(21) Application number: 23169576.8
(22) Date of filing: 24.04.2023
(51) Int. Cl.: H02M 3/158

(54) **UNIVERSAL BUCK-BOOST TOPOLOGY WITH AN ACTIVE NEGATIVE HOLDUP VOLTAGE**

(30) Priority: 26.04.2022 IN 202241024473
(71) Applicant: Goodrich Aerospace Services Pvt Ltd, KR Puram, Hobli Karnataka (IN)
(72) Inventor: SOMANI, Vaibhav Kumar, Bangalore (IN); VILLANO, William E., Canton, CT (US)
(74) Representative: Dehns

(57) **Abstract**

A buck-boost power converting system (100) includes a voltage source input (102) for connecting a voltage source for power conversion. A plurality of switches (S 1-S6) are electrically connected to the voltage source input (102). Each switch is connected to a controller (106) configured for control of the switches. A load output is operatively connected to the switches to provide non-inverted output voltage relative to the voltage source input (102) in a non-inverted mode and to provide inverted output voltage relative to the voltage source input (102) in an inverted mode. A holdup capacitor (C2) with a holdup voltage output is operatively connected to the plurality of switches (S 1-S6) to provide negative holdup voltage for output if power to the voltage source input is interrupted, regardless of whether the load output is in the inverted mode or the non-inverted mode.

## Description

### BACKGROUND

### 1. Field

The present disclosure relates to power conversion, and more particularly to buck-boost power supply topologies with negative holdup voltage.

### 2. Description of Related Art

In a modular power supply, there is a need for power conversion topologies that can be configured to provide negative hold up voltage. Holdup voltage helps ensure power requirements are met when there is no power input to the power supply. Only some components need to have holdup voltage, others can go offline if no power is available. For example, in a typical aircraft the holdup voltage may be needed to help guarantee 28 Volts are available for certain components even when the power input to the power supply is interrupted.

The conventional techniques have been considered satisfactory for their intended purpose. However, there is an ever present need for improved systems and methods for power supply. This disclosure provides a solution for this need.

### SUMMARY

A buck-boost power converting system includes a voltage source input for connecting a voltage source for power conversion. A plurality of switches are electrically connected to the voltage source input. Each switch is connected to a controller configured for control of the switches. A load output is operatively connected to the switches to provide non-inverted output voltage relative to the voltage source input in a non-inverted mode and to provide inverted output voltage relative to the voltage source input in an inverted mode. A holdup capacitor with a holdup voltage output is operatively connected to the plurality of switches to provide negative holdup voltage for output if power to the voltage source input is interrupted, regardless of whether the load output is in the inverted mode or the non-inverted mode.

The system can include a first line running from a positive node of the voltage source input to a first node of the voltage output. A second line can run from a negative node of the voltage source input to a second node of the voltage output. The voltage output can be configured to power a load connected between the first and second nodes of the voltage output. An inductor can be connected in series along the first line. The holdup capacitor can be connected between the first and second lines and there can be a second capacitor connecting between the first and second lines.

The plurality of switches can include a first switch connected in series along the first line between the voltage input and the inductor. A second switch can connect between the first line and the second line. The second switch can connect to the first line at a node between the first switch and the inductor. A third switch can connect between the first line and the second line. The third switch can connect to the first line at a node between the inductor and the first node of the voltage output. A fourth switch can be connected in series along the first line between the first node of the voltage output and where the third switch connects to the first line. A fifth switch can be connected in series with the holdup capacitor, between the first line and the holdup capacitor. A sixth switch can be connected in series along a third line that is in parallel with the first line. The third line can connect to the first line at the node between the first switch and the inductor, and at the first node of the voltage output.

The controller can include a sensor input operatively connected to provide input to the controller indicative of voltage at the voltage source input and of voltage of the holdup capacitor. The controller can include logic for controlling the plurality of switches in three modes depending on voltages at the voltage source input and holdup capacitor. The three modes can include a first mode for charging the holdup capacitor, a second mode for steady state operation after the holdup capacitor is charged, and a third mode for supplying hold up voltage to the holdup voltage output from the holdup capacitor when the controller detects interruption of voltage at the voltage source input.

The controller can include logic configured to cause the controller to cycle the switches in a first state, a second state, a third state, and a fourth state. In the first state the first switch is on, the second switch is off, the third switch is on, the fourth switch is off, the fifth switch is off, and the sixth switch is off. In the second state the first switch is off, the second switch is off, the third switch is on, the fourth switch is off, the fifth switch is on, and the sixth switch is off. In the third state the first switch is off, the second switch is on, the third switch is off, the fourth switch is on, the fifth switch is off, and the sixth switch is off. In the fourth state the first switch is off, the second switch is off, the third switch is on, the fourth switch is off, the fifth switch is off, and the sixth switch is on.

The logic can be configured to cause the controller to control the switches for non-inverting output at the load output in the first, second, and third modes, wherein in the first mode, the controller cycles repeatedly in order through the first state, the second state, and the third state, wherein in the second mode, the controller cycles repeatedly between the first state and the third state, and wherein in the third mode, the controller cycles repeated between the second and the fourth state.

The logic can be configured to cause the controller to control the switches for inverting output at the load output in the first, second, and third modes, wherein in the first mode, the controller cycles repeatedly in order through the first state, the second state, and the fourth state, wherein in the second mode, the controller cycles repeatedly between the first state and the fourth state, and wherein in the third mode, the controller cycles repeated between the second and the third state.

The controller and switches can be configured for pulse width modulation (PWM) control of the switches from state to state. The voltage source input can have a polarity, wherein in an non-inverting mode, the voltage output has the same polarity as the voltage source input, and wherein in an inverting mode, the voltage output as a polarity opposite that of the voltage source input, and wherein regardless of the inverting or non-inverting mode, the holdup voltage output outputs a negative voltage.

A method includes switching a buck-boost circuit between an first mode for charging up a holdup capacitor, a second mode for steady state output to a load, and a third mode for converting negative holdup voltage from the holdup capacitor for output to the load in the event input voltage is interrupted.

The buck-boost circuit can include switches as described above. Switching the buck-boost circuit can include pulse width modulation (PWM) control of the switches to cycle the switches in the four states described above. PWM control of the switches can include controlling the switches for non-inverting or inverting output in the first, second, and third modes described above.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic view of an embodiment of a system constructed in accordance with the present disclosure, showing the switch topology;
Figs 2-3 are tables showing the switching states for non-inverting and inverting modes for the topology of Fig. 1, respectively;
Fig. 4 is a logic flow diagram showing a process for operating the system of Fig. 1 in a non-inverting mode of Fig. 2; and
Fig. 5 is a logic flow diagram showing a process for operating the system of Fig. 1 in an inverting mode of Fig. 3.

### DETAILED DESCRIPTION OF THE PREFERRED EMBODIMENTS

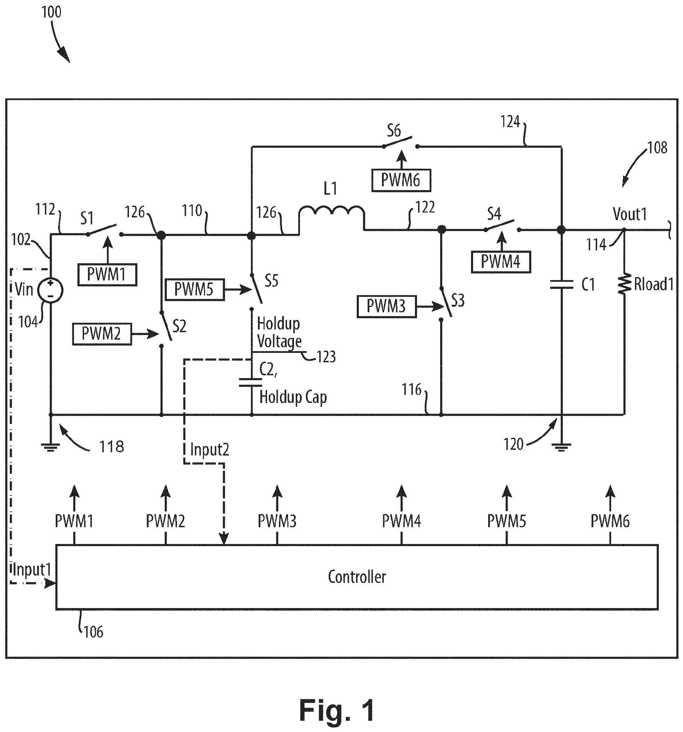

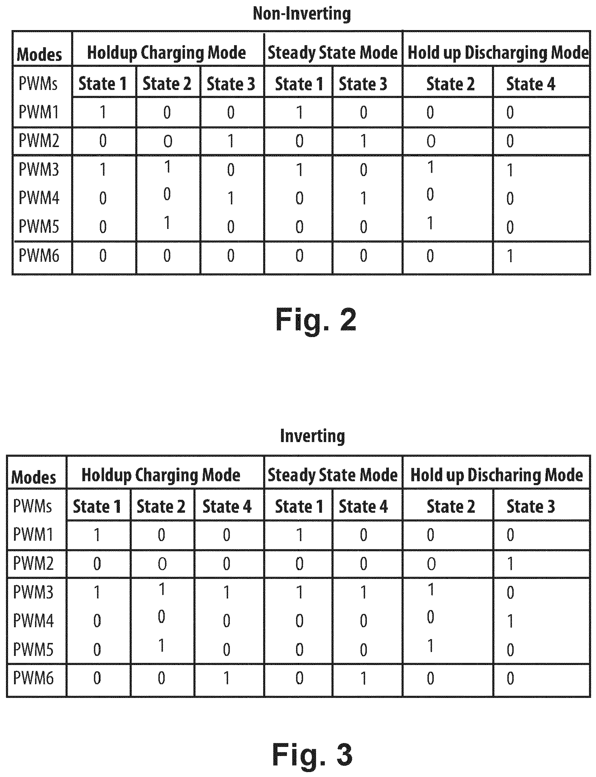

Reference will now be made to the drawings wherein like reference numerals identify similar structural features or aspects of the subject disclosure. For purposes of explanation and illustration, and not limitation, a partial view of an embodiment of a buck-boost power converting system in accordance with the disclosure is shown in Fig. 1 and is designated generally by reference character 100. Other aspects are shown in Figs. 2-5. The systems and methods described herein can be used to selectively provide either inverted polarity or non-inverted polarity output voltage as needed, while providing negative holdup voltage.

The subject matter disclosed herein generally relates to the field of electronic systems, and more particularly to a front end converter topology with active holdup functionality for multi output power supply where input line has a varying voltage range, like a 28V line in aerospace applications for example. In such a system there is need for a topology which can generate a holdup voltage in initial startup time, which can disconnect once the holdup capacitor is fully charged up to the required voltage level.

In present invention disclosure, a universe buck-boost topology with an active holdup capability is shown in Fig. 1. A function of this topology is to generate a holdup voltage using a common inductor at the initial power on sequence and regulate the output for required duration in absence of input power. Once the holdup capacitor is fully charged to a desired level, the controller disconnects the charging switch and drives the converter either to generate a non-inverting output or an inverting-output based on the system requirement.

The topology disclosed herein consists of a single inductor, 6 switches and 2 capacitors. For each output polarity (inverted output relative to the input voltage, or non-inverted output relative to the input voltage), a novel switching sequence is provided which is listed in the tables of Figs. 2-3. In this topology, the holdup voltage inverts the input voltage. Vout can be non-inverted or inverted as needed for a given installation. Vin is DC in this topology. Systems as shown in Fig. 1 can be distributed, e.g. to remote sensors in an aircraft, or can be used in any other suitable application.

The buck-boost power converting system 100 includes a voltage source input 102 for connecting a voltage source 104 for power conversion. A plurality of switches S1, S2, S3, S4, S5, S6 are electrically connected to the voltage source input 102, wherein each switch S1, S2, S3, S4, S5, S6 is connected to a controller 106 configured for control of the switches S1, S2, S3, S4, S5, S6. In appropriate applications, S5, S6 and S4 may require two complementary MOSFETS each to ensure no current in the 0 state. A voltage output 108 is configured to connect to a load R_{load} to power the load R_{load} with converted power from the voltage source input 102. The controller 106 is configured to provide positive voltage or negative voltage to the voltage output 108, as needed.

A first line 110 runs from a positive node 112 of the voltage source input 102 to a first node 114 of the voltage output. A second line 116 runs from a negative node 118 (or ground) of the voltage source input 102 to a second node 120 (or ground) of the voltage output 108. The voltage output 108 is configured to power a load R_{load} connected between the first and second nodes 114, 120 of the voltage output 108. An inductor L1 is connected in series along the first line 110. A capacitor C1 connects between the first and second lines 110, 116.

The first switch S1 is connected in series along the first line 110 between the voltage input 102 and first node 126 of the inductor L1. The second switch S2 connects between the first line 110 and the second line 116 (or ground). The second switch S2 connects to the first line 110 at a node 126 between the first switch S1 and the inductor L1. The third switch S3 connects between the first line 110 and the second line 116 (or ground). The third switch S3 connects to the first line 110 at a node 122 between the inductor L1 and the first node 114 of the voltage output. The fourth switch S4 is connected in series along the first line 110 between the first node 114 of the voltage output and a node 122 of the third switch S3.

A holdup capacitor C2 is connected between the first and second lines 110, 116. The holdup capacitor connects to the first line 110 between the first switch S1 and the first inductor node 126. A fifth switch S5 is connected in series with the holdup capacitor C2, between the first line 110 and the holdup capacitor C2. A holdup voltage output 123 is provided from a node between the fifth switch S5 and the holdup capacitor C2. Load components that benefit from holdup voltage in the event that power at the voltage source 104 is interrupted can be connected to be powered from the holdup voltage output 123.

The sixth switch S6 is connected in series along a third line 124 that is in parallel with the first line 110. The third line 124 connects to the first line 110 at the node 126 between the first switch S1 and the inductor L1, and at the first node 114 of the voltage output 108.

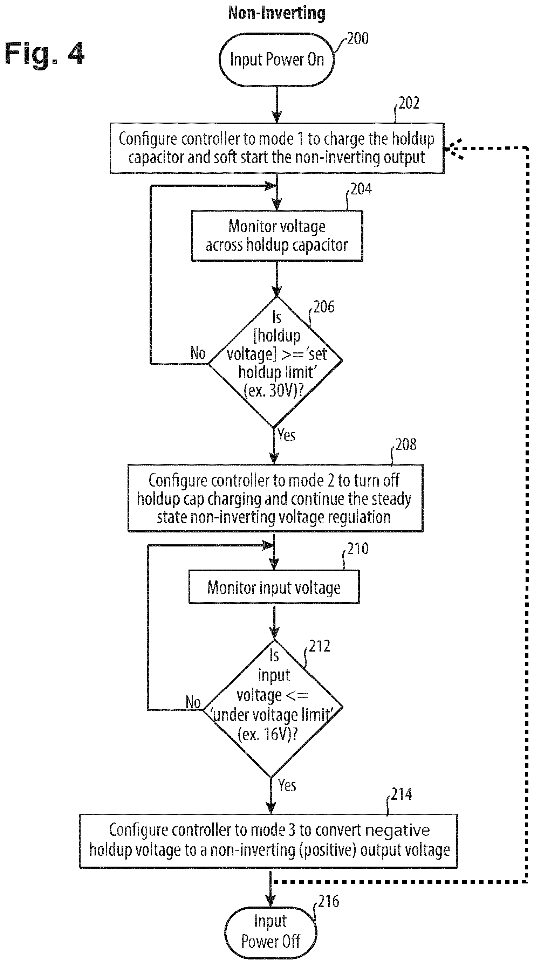

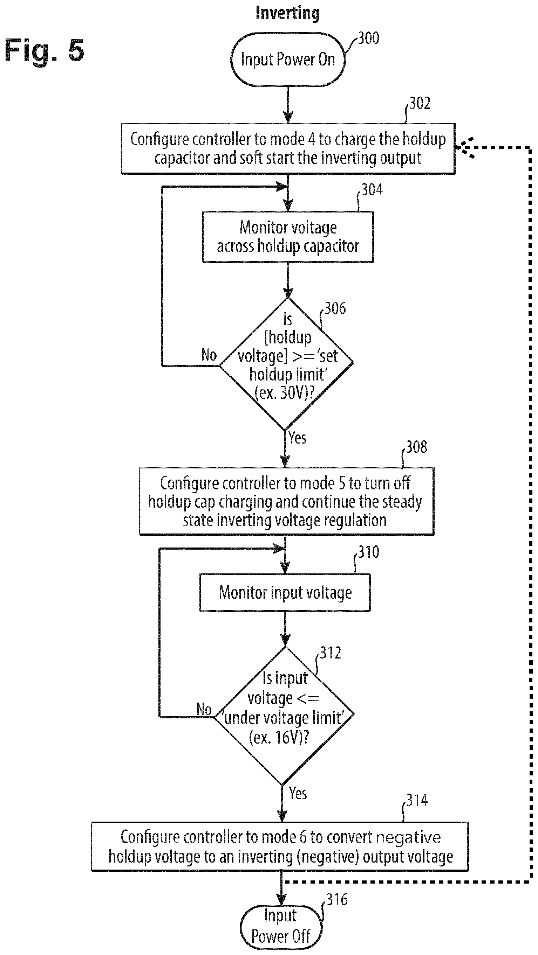

The controller 106 includes logic or machine readable instructions for both a non-inverting mode (Figs. 2 and 4) and an inverting mode (Figs. 3 and 5). The controller 106 and switches S1, S2, S3, S4, S5, S6 are configured for pulse width modulation (PWM) control of the switches S1, S2, S3, S4, S5, S6 from state to state for the inverting and non-inverting modes described below with respect to Figs. 2-5. The voltage source input 102 has a polarity depending on the polarity of the voltage source 104 connected to the voltage source input 102 (in Fig. 1, the polarity of the voltage source is indicated with the positive and negative signs).

In the non-inverting mode of Figs. 2 and 4, the voltage output 108 has the same polarity as the voltage source input 102. In the inverting mode of Figs. 3 and 5, the voltage output 108 has a polarity opposite that of the voltage source input 102. In both modes (inverting and non-inverting) described above, the voltage of the holdup voltage output is negative, i.e. inverted relative to the voltage source input 102.

The controller 106 is configured to receive input and to switch between the non-inverting mode and the inverting mode based on the input. In addition, the controller is operatively connected to sample the voltage of the voltage source input 102 and of the holdup capacitor C2 and to control the switching of the switches S1-S6 based on the sampled voltages, as indicated by the dashed lines labeled Input 1 and Input 2 in Fig. 1.

With reference now to Fig. 2, the logic or machine readable instructions of the controller 106 are configured to cause the controller 106, in the non-inverting mode, to cycle the switches S1-S6 at PWM frequencies between states. Depending on voltage at the voltage source input 102 (labeled in Fig. 1), the logic of the controller 106 controls the switches in the non-inverting mode through three phases or sub-modes: a first mode for charging the holdup capacitor C2 of Fig. 1, a second mode for steady state operation after the holdup capacitor C2 is charged, and a third mode for converting negative hold up voltage from the holdup capacitor C2 to a positive output voltage when the controller 106 detects interruption of voltage at the voltage source input 102. These three modes are labeled in Fig. 2. The first mode has three states, labeled 1, 2, and 3 in Fig. 2, for the switches S1-S6, which the controller 106 cycles through in order, repeatedly. In the table of Fig. 1, a value of 1 for a given switch (e.g. PWM 1 corresponds to the first switch S1, PMW2, corresponds to the second switch S2, and so forth to S6) indicates the given switch is commanded closed or on. A value of 0 in the table of Fig. 2 indicates the given switch is commanded open or off.

With continued reference to Fig. 2, in the second or steady state mode of the non-inverting mode, there are two states between which the controller 106 switches the switches S1-S6 of Fig. 1. Specifically, the controller 106 switches the switches S1-S6 between the first and third states. Similarly, in the holdup discharging mode of the non-inverting mode of Fig. 2, the controller 106 switches the switches S1-S6 between two states, namely the second state and a forth state, wherein the on/off states are listed in the table of Fig. 2. Fig. 3 provides the switching states for the same three modes (charging the holdup capacitor C2, steady state, and discharging of the holdup capacitor C2) but for the inverting mode of the voltage output 108 of Fig. 1. With reference to Figs. 2-3, the output voltage can be achieved at desired voltage level (including voltages that qualify as buck voltages as well as voltages that qualify as boost voltages) by operating switches in first state (on) and second state (off) in a particular duty cycle of total time period.

With reference now to Fig. 4, as indicated in box 200, to start up the system 100 of Fig. 1 in the non-inverting mode of Fig. 2, input power is supplied, i.e. the power supply 104 of Fig. 1 is turned on. Box 202 indicates that the controller, e.g. controller 106 of Fig. 1, starts in the first mode of Fig 2., i.e. to charge the holdup capacitor C2 of Fig. 1 and soft start the non-inverting output, i.e. the voltage output 108 of Fig. 1. As indicated in box 204 of Fig. 4, the controller monitors voltage across the holdup capacitor. As indicated in box 206, the monitoring of box 206 continues until holdup voltage in the holdup capacitor meets or exceeds a set holdup value, e.g. 30 V, which is negative or inverted relative to the input voltage. Then, as indicated in box 208 of Fig. 4, the controller changes to the second mode, to stop charging the holdup capacitor and continue steady state operation of the non-inverting output voltage. The controller then monitors the input voltage, as indicated in box 210, until the input voltage meets or drops below an under voltage limit, e.g. 16 V, as indicated in box 212. If the under voltage limit condition is met, then the controller changes to the third mode for converting the negative holdup voltage to a non-inverting (positive) output voltage, as indicated in Box 214. Finally, the input power can be turned off as indicated in Box 216. A primary purpose of the holdup voltage is to convert this into output voltage and supply to Rload in absence of input power. Holdup voltage output 123 of Fig. 1 is a provision, where in some systems the holdup voltage can be directly supplied to some loads requiring same voltage level as holdup. If after an under voltage condition is met, the input power does not turn off, but resumes at normal voltage the controller 106 (of Fig. 1) can cycle back through the first two modes without turning all the way off, as indicated in Figs. 4-5 with the dashed line.

Fig. 5 provides a similar process to that shown in Fig. 4, but for the inverting output mode of Fig. 3. Boxes 300-316 correspond to boxes 200-216, respectively, of Fig. 2, however, the modes 4, 5, and 6 are substituted for the modes 1, 2, and 3 described above for Fig. 2. Mode 4 in Fig. 5 corresponds to the holdup voltage charge up mode of Fig. 3. Mode 5 of Fig. 5 corresponds to the steady state mode of Fig. 3, and mode 6 of Fig. 5 corresponds to the holdup discharge mode of Fig. 3.

The following paragraph is a discussion of potential benefits of the systems and methods disclosed herein. The proposed topology can charge a negative voltage in holdup capacitor in a controlled way by using a common inductor available for non-inverting or inverting buck-boost conversion. The holdup capacitor can hold the negative voltage with relatively little leakage because the negative holdup voltage cannot bias the body diode of switch S5. The topology disclosed herein can convert the negative holdup voltage into a non-inverting output when the input voltage goes equal to or below an under voltage limit. The topology disclosed herein can also convert the negative holdup voltage into an inverting output when input voltage goes equal to or below an under voltage limit. The power conversion topology disclosed herein can be configured to provide either positive or negative output voltage in normal steady state mode. Only a single inductor need be used for charging the local holdup capacitor, input to output voltage conversion, and holdup voltage to output voltage conversion. This can eliminate the need for custom magnetics and can be an advantage over the traditional topologies that require a transformer with an extra winding that is unused in normal steady state operation to charge holdup capacitance. The topology disclosed herein can provide a method for adding localized holdup energy capability to point-of-use buck-boost regulators. The topology disclosed herein has at least two switches in the forward power path which can help to mitigate any risk of failure of a single switch. If one switch fails short the other switch can be opened to protect the circuit.

As will be appreciated by those skilled in the art, aspects of the present embodiments may be embodied as a system, method or computer program product. Accordingly, aspects of the present embodiments may take the form of an entirely hardware embodiment, an entirely software embodiment (including firmware, resident software, micro-code, etc.) or an embodiment combining software and hardware aspects that may all generally be referred to herein as a "circuit," "module," "component" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described above with reference to flowchart illustrations and/or block diagrams of methods, apparatus (systems) and computer program products according to embodiments of the embodiments. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in a flowchart and/or block diagram block or blocks.

The methods and systems of the present disclosure, as described above and shown in the drawings, provide for a buck-boost topology and switching sequences for inverted or non-inverted polarity output voltage as needed, while providing negative holdup voltage. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A buck-boost power converting system (100) comprising:
a voltage source input (102) for connecting a voltage source (104) for power conversion;
a plurality of switches (S1-S6) electrically connected to the voltage source input (102), wherein each switch is connected to a controller (106) configured for control of the switches;
a load output operatively connected to the switches (S1-S 6) to provide non-inverted output voltage relative to the voltage source input (102) in a non-inverted mode and to provide inverted output voltage relative to the voltage source input (102) in an inverted mode; and
a holdup capacitor (C2) with a holdup voltage output operatively connected to the plurality of switches to provide negative holdup voltage for output if power to the voltage source input (102) is interrupted, regardless of whether the load output is in the inverted mode or the non-inverted mode.

2. The system as recited in claim 1, further comprising:
a first line (110) running from a positive node (112) of the voltage source input to a first node (114) of the voltage output; and
a second line (116) running from a negative node (118) of the voltage source input to a second node (120) of the voltage output, wherein the voltage output is configured to power a load connected between the first and second nodes (114, 120) of the voltage output.

3. The system as recited in claim 2, further comprising an inductor (L1) connected in series along the first line (110).

4. The system as recited in claim 3, wherein the holdup capacitor (C2) is connected between the first and second lines (110, 116) and further comprising a second capacitor connecting between the first and second lines (110, 116).

5. The system as recited in claim 4, wherein the plurality of switches (S1-S6) includes:
a first switch (S1) connected in series along the first line (110) between the voltage input and the inductor;
a second switch (S2) connecting between the first line (110) and the second line (116), wherein the second switch connects to the first line at a node (126) between the first switch (S1) and the inductor (L1);
a third switch (S3) connecting between the first line (110) and the second line (116), wherein the third switch connects to the first line at a node (122) between the inductor (L1) and the first node (114) of the voltage output;
a fourth switch (S4) connected in series along the first line (110) between the first node (114) of the voltage output and where the third switch (S3) connects to the first line (110);
a fifth switch (S5) connected in series with the holdup capacitor (C2), between the first line (110) and the holdup capacitor (C2); and
a sixth switch (S6) connected in series along a third line (124) that is in parallel with the first line (110), wherein the third line (124) connects to the first line (110) at the node (126) between the first switch (S1) and the inductor (L1), and at the first node (114) of the voltage output.

6. The system as recited in claim 1, wherein the controller (106) includes:
a sensor input operatively connected to provide input to the controller indicative of voltage at the voltage source input (102) and voltage of the holdup capacitor (C2); and
logic for controlling the plurality of switches (S 1-S6) in three modes depending on voltage at the voltage source input (102) and holdup capacitor (C2), wherein the three modes include:
a first mode for charging the holdup capacitor (C2);
a second mode for steady state operation after the holdup capacitor (C2) is charged; and
a third mode for supplying hold up voltage to the holdup voltage output from the holdup capacitor (C2) when the controller (106) detects interruption of voltage at the voltage source input (102).

7. The system as recited in claim 6, wherein the controller (106) includes logic configured to cause the controller to cycle the switches (S1-S6) in a first state, a second state, a third state, and a fourth state,
wherein in the first state the first switch (S1) is on, the second switch (S2) is off, the third switch (S3) is on, the fourth switch (S4) is off, the fifth switch (S5) is off, and the sixth switch (S6) is off,
wherein in the second state the first switch (S 1) is off, the second switch (S2) is off, the third switch (S3) is on, the fourth switch (S4) is off, the fifth switch (S5) is on, and the sixth switch (S6) is off,
wherein in the third state the first switch (S 1) is off, the second switch (S2) is on, the third switch (S3) is off, the fourth switch (S4) is on, the fifth switch (S5) is off, and the sixth switch (S6) is off, and
wherein in the fourth state the first switch (S1) is off, the second switch (S2) is off, the third switch (S3) is on, the fourth switch (S4) is off, the fifth switch (S5) is off, and the sixth switch (S6) is on.

8. The system as recited in claim 7, wherein the logic is configured to cause the controller to control the switches for non-inverting output at the load output in the first, second, and third modes,
wherein in the first mode, the controller (106) cycles repeatedly in order through the first state, the second state, and the third state,
wherein in the second mode, the controller (106) cycles repeatedly between the first state and the third state, and
wherein in the third mode, the controller (106) cycles repeated between the second and the fourth state.

9. The system as recited in claim 7, wherein the logic is configured to cause the controller to control the switches for inverting output at the load output in the first, second, and third modes,
wherein in the first mode, the controller (106) cycles repeatedly in order through the first state, the second state, and the fourth state,
wherein in the second mode, the controller (106) cycles repeatedly between the first state and the fourth state, and
wherein in the third mode, the controller (106) cycles repeated between the second and the third state.

10. The system as recited in claim 7, wherein the controller (106) and switches (S1-S6) are configured for pulse width modulation (PWM) control of the switches from state to state.

11. The system as recited in any preceding claim, wherein the voltage source input (102) has a polarity, wherein in an non-inverting mode, the voltage output has the same polarity as the voltage source input (102), and wherein in an inverting mode, the voltage output as a polarity opposite that of the voltage source input (102), and wherein regardless of the inverting or non-inverting mode, the holdup voltage output outputs a negative voltage.

12. A method comprising:
switching a buck-boost circuit between a first mode for charging up a holdup capacitor, a second mode for steady state output to a load, and a third mode for converting negative voltage from the holdup capacitor for output to the load in the event input voltage is interrupted.

13. The method as recited in claim 12, wherein the buck-boost circuit includes a first switch, a second switch, a third switch, a fourth switch, a fifth switch and a sixth switch, wherein switching the buck-boost circuit includes pulse width modulation (PWM) control of the switches to cycle the switches in a first state, a second state, a third state, and a fourth state,
wherein in the first state the first switch is on, the second switch is off, the third switch is on, the fourth switch is off, the fifth switch is off, and the sixth switch is off,
wherein in the second state the first switch is off, the second switch is off, the third switch is on, the fourth switch is off, the fifth switch is on, and the sixth switch is off,
wherein in the third state the first switch is off, the second switch is on, the third switch is off, the fourth switch is on, the fifth switch is off, and the sixth switch is off, and
wherein in the fourth state the first switch is off, the second switch is off, the third switch is on, the fourth switch is off, the fifth switch is off, and the sixth switch is on.

14. The method as recited in claim 13, wherein PWM control of the switches includes controlling the switches for non-inverting output at a load output in first, second, and third modes,
wherein in the first mode, the controller cycles repeatedly in order through the first state, the second state, and the third state,
wherein in the second mode, the controller cycles repeatedly between the first state and the third state, and
wherein in the third mode, the controller cycles repeated between the second and the fourth state.

15. The method as recited in claim 13, wherein PWM control of the switches includes controlling the switches for inverting output at a load output in first, second, and third modes,
wherein in the first mode, the controller cycles repeatedly in order through the first state, the second state, and the fourth state,
wherein in the second mode, the controller cycles repeatedly between the first state and the fourth state, and
wherein in the third mode, the controller cycles repeated between the second and the third state.
